Europäisches Patentamt

European Patent Office

Office européen des brevets

(11) Publication number: **0 133 334**
**B1**

# EUROPEAN PATENT SPECIFICATION

(45) Date of publication of patent specification: **21.12.88**

(51) Int. Cl.⁴: **A 01 D 46/26**

(21) Application number: **84201079.5**

(22) Date of filing: **19.07.84**

(54) Harvester comprising a harvesting machine and a screen wagon.

(30) Priority: **20.07.83 NL 8302598**

(43) Date of publication of application:
**20.02.85 Bulletin 85/08**

(45) Publication of the grant of the patent:
**21.12.88 Bulletin 88/51**

(84) Designated Contracting States:
**BE DE FR IT NL**

(56) References cited:
**US-A-3 535 864**
**US-A-3 543 495**
**US-A-3 548 579**

(73) Proprietor: **Van den Munckhof, Peter Jozef**
**Marie**
**Lindweg 1**
**NL-5961 AK Horst (NL)**

(73) Proprietor: **Van den Munckhof, Mathijs Rene**
**Maria Jozef**
**Westerholtstraat 51**
**NL-5961 BH Horst (NL)**

(72) Inventor: **van den Munckhof, Peter Jan Willem**
**No. 111, Meterikseweg**
**NL-5961 CV Horst (NL)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a harvesting machine for harvesting fruit hanging on trees, for example cherries, comprising a conveyor unit arranged on a wagon and comprising a conveyor belt, at least one single collecting cloth which is arranged along the conveyor belt and on the one hand is wound up on a drum extending along the conveyor belt, such that on winding up the collecting cloth fruit harvested thereon is discharged on the conveyor belt, and on the other hand is connected with a frame for spreading the collecting cloth which frame is connected with the wagon, and driving means for driving the conveyor unit.

The harvesting machine described in US—A—3,548,579, comprises a collecting cloth which is located at least partly directly on the ground during harvesting. This has the disadvantage that the fruit falling from the trees strike the hardly elastic collecting cloth so that damage and bruises giving rise to ripe-rot may occur. Furthermore, complicated, expensive constructions are required for limiting the falling speed of the fruit to avoid the aforesaid disadvantage (see US—A—3,543,495). The invention has for its object to provide a collecting cloth on which the soft fruit dropping from the trees can be collected whilst avoiding, as far as possible, damage and/or bruises, whilst no additional means are required for any reduction of the falling speed of the fruit. According to the invention, this is achieved in that stretching means stretch automatically the collecting cloth which when spread remains taut, the collecting cloth being supported by the spreading frame whereby it is located over and free from the ground under the tree.

When the drum is provided with a braking device for decelerating the rotation of the drum for spreading the collecting cloth, it is ensured that the collecting cloth remains taut when spread, whilst at the termination of the link-motion of the frame the cloth does not unwind further from the drum.

When the frame is preferably provided with at least one supporting wheel which rolls on a path formed by a ground support, when the collecting cloth is spread during the link motion of the frame and bears on the ground via the supporting wheel and the bottom support, the harvesting machine can be prevented from excessively leaning over towards the tree from which the cherries have to be gathered when the relatively large collecting cloth is spread. When the frame comprises a slidable corner piece fastened through a crosslink to the chassis, the frame slides towards the tree at the shortest possible distance from the ground so that the work can also be carried out at trees having low hanging branches, whilst only at a short distance from the harvesting machine the frame moves upwards for discharging ths last portion of the fruit collected on the cloth.

Harvesting and manouvering along the trees in the orchard will be easier if the conveyor unit, which mainly constitutes the chassis of the wagon, is light-weighted but still rigid and torsion-free. Preferably the transport unit is mainly shaped in the form of a sheath consisting of a shoot and a covering plate on said shoot, around which the conveyor belt is passed.

According to the prior art (U.S. Patent Specifications 3,535,864, 3,543,495, 3,548,579 and 3,808,786) harvesting machines are moved by a separate prime mover, for example, an agricultural tractor. Propulsion and manoeuvering is easier with a self-propelled harvesting machine, which can be more readily moved between two adjacent orchard corridors separated by fruit trees. Accordingly, it is preferred that the harvesting machine is provided with a steering unit comprising a steering device and with an engine to drive the wagon.

The manoeuverability is appreciably improved when preferably by the steering unit the front and rear wheels of the wagon can be simultaneously rotated in opposite senses. The steering mode of such a harvesting machine can be cheaply improved and facilitated when, preferably, the steering unit comprises at least one steering rod connected on the one hand with the steering device and on the other hand with the front and rear wheels and furthermore comprises two hydraulic systems connecting the front and rear wheels respectively with the chassis.

Harvesting will be easier and the total time period therefore shorter, if the harvested fruit is separated from waste mixed therewith. From U.S. Patent Specification 3,535,864 is known a selecting device arranged below the conveyor belt at the level of an ascending part thereof. The choice of the place of this selecting device has the disadvantage that the conveyor belt has to be perforated to generate an air stream across the conveyor belt for blowing waste away. Such a place for the cleaning device is preferred as the type of elevator can be freely chosen and a better separation of harvested fruit from waste is ensured. Therefore the cleaning unit separating the waste from the fruit is disposed at the delivery end of the conveyor unit. Moreover, the separation is improved because owing to the disposition of the cleaning unit in accordance with the invention during the dropping movement of the fruit from the delivery end of the conveyor belt the waste is separated out in a direction opposite the dropping direction.

U.S. Patent Specification 3,535,864 describes a lift system by means of which a container can be brought below a discharging point of the conveyor unit. Preferably an exchanger is provided by means of which a container to be filled with fruit can be rapidly moved to the discharging place, whilst the harvesting machine can move on during the exchange. According to the invention this is achieved in that the harvesting machine is provided with a container exchanger, the loading and unloading positions of which being located in line with the wagon, whilst preferably the exchanger comprises a pallet arranged on a disc rotatable about a vertical axis. When the exchanger is disposed on a trailer separately coupled with the wagon, the weight of the containers placed on the exchanger which are filled in the case of cherries with, for example, 1000 litres of water each bears on the bottom so that the harvesting machine is less heavily loaded, which materially improves the manoeuverability of the harvesting machine in an orchard.

Finally the invention rslates to a harvester comprising a harvesting machine and a screen wagon provided with steering means, in which in the working position of the harvester a screen of the wagon carried by a framework discharges on the collecting cloth of the harvesting machine, whilst the collecting cloth and the screen mainly screen off the ground below the tree.

Such a harvester is described in U.S. Patent Specification 3,548,579. The screen wagon used comprises a chassis with a pair of wheels and a separate wheel arranged at a distance from said pair and provided with steering means. When arranging the screen below a tree for discharging on the collecting cloth of the harvesting machine this known screen wagon is manoeuverable only with difficulty. The invention has for its object to improve the manoeuverability and the disposition of the screen to discharge on the collecting cloth. This is achieved in that the screen frame forms part of the steering means of the screen wagon. When the screen frame is rigid, a simple screen wagon is obtained, in which the screen is constantly stretched so that the falling fruit is not or only hardly damaged, whilst means for decelerating the dropping speed of the fruit can be dispensed with. When the screen frame is tiltable about a longitudinal axis of the screen wagon with the aid of tilting means and, as the case may be, when it is slidable with the aid of sliding means transversely of said longitudinal axis, the disposition of the screen with respect to the collecting cloth is further facilitated. A satisfactorily manoeuverable, manually steerable screen wagon is obtained, when it comprises a longitudinal chassis beam provided with at least one wheel and being rotatably connected with a chassis beam provided with a pair of wheels with which the steering means are connected.

The above-mentioned and further features will become apparent from a non-limitative embodiment with reference to the accompanying drawings which show in:

Fig. 1 a harvester comprising a harvesting machine and a screen wagon embodying the invention;

Fig. 2 an enlarged, fragmentary, perspective view of a transport unit of the harvesting machine embodying the invention;

Figs. 3 and 4 side elevations of a collecting cloth provided with a linking system in a wound-up and a wound-off position;

Fig. 5 schematically a steering device of the harvesting machine embodying the invention;

Fig. 6 a sample exchanger for the harvesting machine embodying the invention;

Fig. 7 a detail VII of Fig. 1;

Fig. 8 a persective view of another screen wagon;

Fig. 9 a perspective view of the rigid screen frame with a screen stretched thereon;

Figs. 10 and 11 sectional views taken on the line X—X in Fig. 8;

Fig. 12 a sectional view taken on the line XII—XII in Fig. 8; and

Fig. 13 a sectional view taken on the line XIII—XIII in Fig. 9.

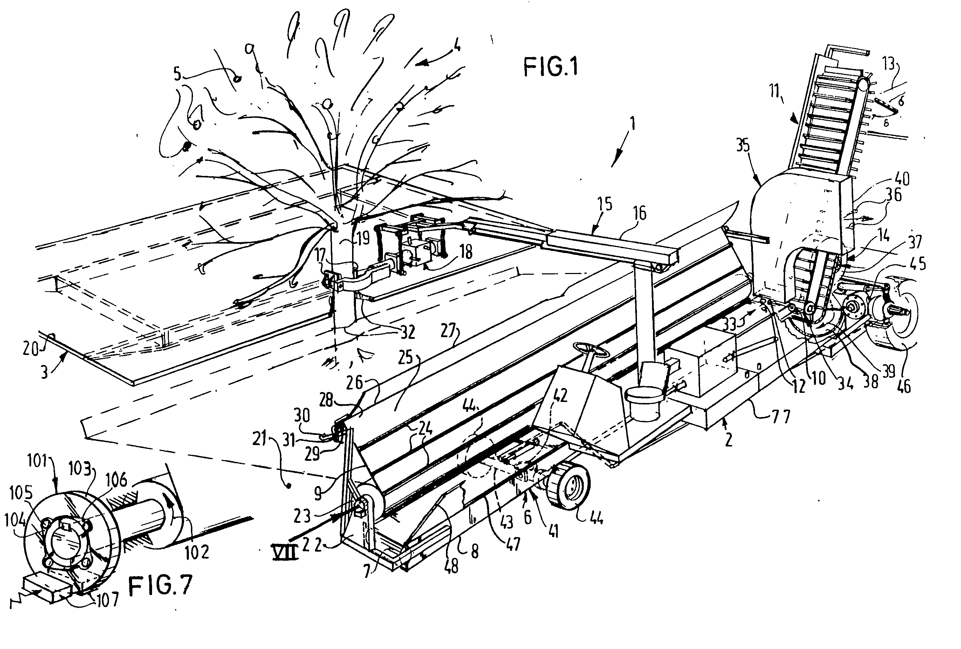

Fig. 1 shows a harvester 1 embodying the invention comprising a harveting machine 2 and a screen wagon 3. The harvester 1 is intended for harvesting fruit 5 hanging on trees 4, for example, cherries.

The harvesting machine 2 embodying the invention comprises a conveyor unit 8 arranged on a wagon 6 and comprising a conveyor belt 7, a collecting cloth 9 extending in the direction of length of the conveyor belt 7 and adjoining the latter for discharge, an elevator 11 adjoining a delivery end 10 of the conveyor unit 8 and carrying the harvested fruit 12 into a container 13 and driving means 14 for driving the conveyor unit 8 and the elevator 11. The harvesting machine 2 furthermore comprises a tree-trunk shaker 15.

The trunk shaker 15 comprises a lever 16 provided at one end with a vibrating device 18 having two jaws 17, by which through the jaws 17 gripping around a trunk 19 of the tree 4 a vibratory movement is transferred to the trunk 4 as a result of which the cherries are loosened. The loosening cherries 5 drop on the spread collecting cloth 9 (the spread position is indicated by broken lines) or on a screen 20 of the screen wagon 3 joining the spread collecting cloth 9 for discharge. The screen 20 and the spread collecting cloth screen off mainly a ground 21 below the bottom 4. After all cherries 5 falling on the screen 20 are discharged to the collecting cloth 9, the latter is wound up around a drum 23 discharged to the collecting cloth 9, the latter is wound up around a drum 23 arranged in the direction of length of the conveyor belt and being rotatably journalled in yokes 22. When the fruit loaded collecting cloth 9 is wound up the fruit 5 is moved along by ribs 24 on a face 25 of the collecting cloth 9 coming into contact with the fruit 5, said ribs extending in the direction of length of the drum 23. Moreover, a side 26 of the collecting cloth 9 is provided with an upright rim 27, which pushes on the harvested fruit 5. A beam 28 fastened to the side 26 of the collecting cloth 9 is provided at its ends with rollers 29, which run on a path 30 when the collecting cloth is being wound up, on which path the rollers are locked by means of guard elements 31 when the collecting cloth is fully wound. In the wound-up state indicated by solid lines in Fig. 1 the collecting cloth 9 is inclined to the conveyor belt 7 to an extent such that all fruit collected on the cloth are discharged to the conveyor belt 7. The upright rim 27 of the collecting cloth 9 and the screen 20 of the screen wagon 3 have both a recess 32 accommodating the trunk 19 of the tree 4 during the harvesting of the fruit 5.

With the aid of the conveyor belt 7 the fruit 12 harvested and discharged via the collecting cloth 9 to the conveyor belt 7 is transported in the direction of the arrow 33 to the elevator 11. At the level of a junction 34 of the delivery end 10 of the conveyor belt 7 with the elevator 11 a cleaning device 35 is arranged for separating waste 36 from the harvested fruit 12. The cleaning unit 35 comprises a ventilator 37 by which through a channel 38 air 39 is passed upwards through the fruit 12 dropping downwards from the delivery end 10 of the conveyor belt 7. In this way waste 36 is very effectively removed from the fruit 12 in a counter-current. The waste 36 is blown away sideways from the harvesting machine 2 through a diffusor 40. The cleaned fruit 12 is lifted by the elevator 11 and discharged in a container 13.

The collecting cloth 9, the conveyor unit 8, the trunk shaker 15, the cleaning device 35 and the elevator 11 are arranged on a single wagon 6, the conveyor unit 8 mainly constituting the chassis 41 of the wagon 6 in accordance with the invention. The wagon 6 comprises two front wheels 44 connected through an universal coupling and being rotatable about a rigid axle 43 and two rear wheels 46 connected with a rear axle 45. By means of the universal joint 42 a three-point support of the wagon 6 is obtained, which is stable under any ground condition.

A rim 47 of the conveyor unit 8 located opposite the drum 23 is provided with an inclined plate 48 which prevents the fruit being discharged from the collecting cloth from falling across the conveyor belt 7 and the rim 47 from the wagon 6.

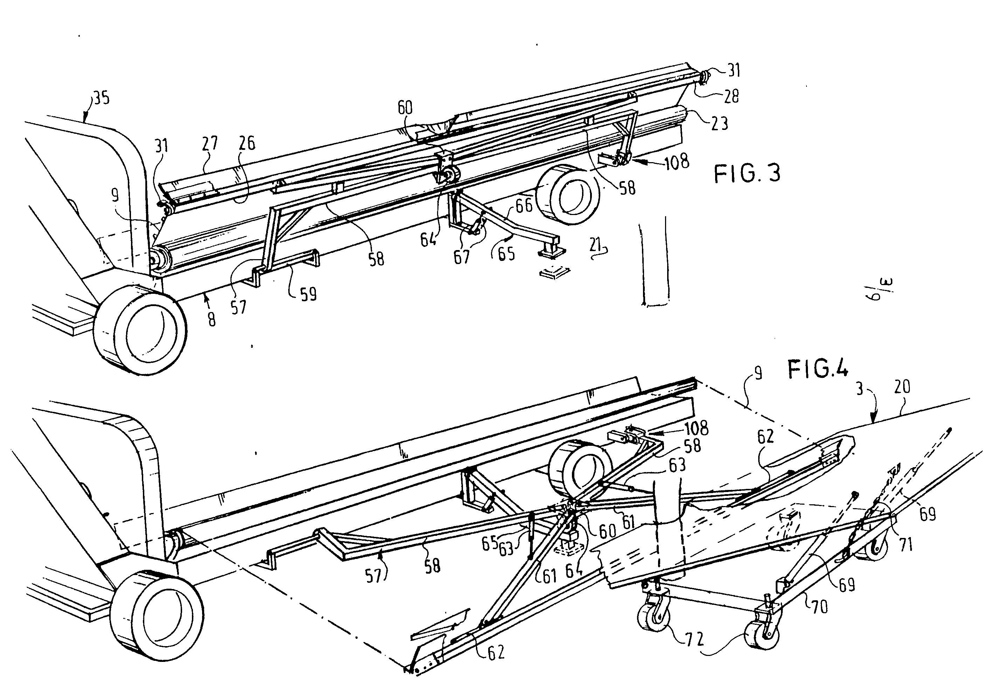

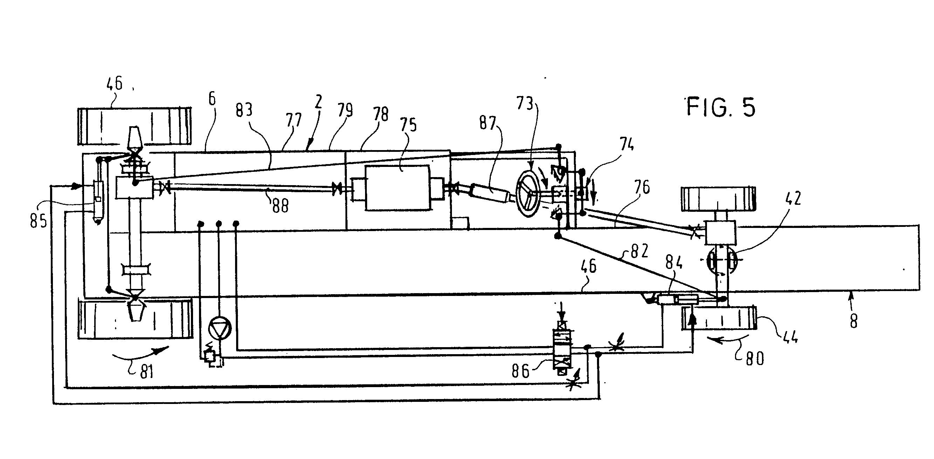

With the aid of a braking device 101 the rotation in the direction of the arrow 102 for spreading the collecting cloth 9 is decelerated so that during spreading the collecting cloth remains taut owing to the effect of the braking device 101, whilst it remains taut when the collecting clotch is drawn in, since drawing in is counteracted by the gas springs 63, which will be described with reference to Figs. 3 and 4. The braking device 101 comprises a disc 103 having recesses 104 holding balls 105. When rotating in the direction of the arrow 102 the balls 105 run on the inclined walls 106 so that the disc 103 is rotated in the same direction. On this disc 103 are, however, acting braking members 107, which brake the rotation of the disc 103 and hence the rotation of the drum 23. During rotation in a direction opposite the arrow 102 the balls 105 are located in a rounded-off part of a recess where they can freely turn without causing the disc 103 to rotate.

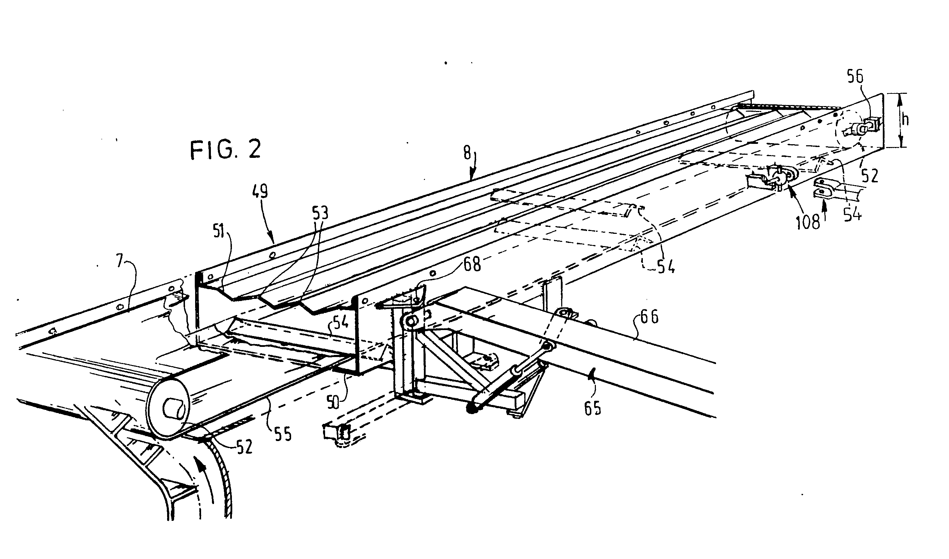

The conveyor unit 8, which mainly forms the chassis 41 of the wagon 6, is shown in further detail in Fig. 2; it has mainly the shape of a shoot 49 comprising a gutter 50 and a covering plate 51 closing the gutter 50. Around the covering plate 51 is arranged the conveyor belt 7, which is furthermore stretched between two reversing rollers 52. The covering plate 51 is provided with stiffening ribs 53 extending substantially in the transport direction of the conveyor belt 7 and being in linear contact with the conveyor belt 7. Owing to this linear contact a minimized frictional contact is established between the conveyor belt 7 and the covering plate 51, whilst in the transport direction of the conveyor belt 7 no obstacles are found so that the transported fruit 12 is prevented from "dancing" on the conveyor belt. The gutter 50 of the transport unit 8 is provided with stiffening pieces arranged between the reversing rollers 52 and constructed in the form of angle-section profiles 54. These angle-section profiles 54 support the lower run 55 of the conveyor belt 7 so that excessive sagging of this lower run 55 is avoided and hence the height $h$ of the conveyor unit 8 as well as the covering plate 51 can be small. One of the two reversing rollers 52 is furthermore provided with a stretching device 56 for stretching the conveyor belt 7.

Figs. 3 and 4 show a linking frame 57. The collecting cloth 9 is wound on the one hand around the drum 23 and on the other hand it is fastened by its edge 26 to the beam 28 of the frame 57. The frame 57 slides from the position shown in Fig. 3 to the position shown in Fig. 4, whilst the collecting cloth 9 indicated by dot-and-dash lines is spread. The frame 57 comprises two corner pieces 58, one of which is slidable along a rod 59 connected with the conveyor unit 8, whereas the other is connected with the conveyor unit 8 through a universal joint 108. On the other hand the two corner pieces 58 are rotatably journalled in the turn piece 60. Two supporting beams 61 connect each the turn piece 60 with the beam 28 and are rotatably journalled for this purpose in the turn piece 60 and slidably arranged in a sliding guide 62 for the beam 28. Between each of the corner pieces 58 and the supporting beams 61 gas springs 63 are arranged so as to be active in the direction of the spread state of the collecting cloth 9 (the position shown in Fig. 4). After loosening the guard elements 31 the frame 57 moves by the action of the gas springs 63 to the spread position, the collecting cloth 9 winding off the drum 23 and a supporting wheel 64 fastened to the turn piece 60 rolling along a path 66 formed by a bottom support 65 so that the frame 57 bears on the ground through the supporting wheel 64 and the bottom support 65 during the movement along the path 66 in the spread position of the cloth 9. With the aid of gas springs 67, after the supporting wheel 64 is disengaged from the path 66, that is to say, after the cloth 9 is withdrawn, the bottom support 65 is automatically lifted from the ground 21. The bottom support 65 need not be lifted by the operator and the harvesting machine 2 can be driven with the bottom support 65 in the outwardly deflected position shown in Fig. 3 to the next tree. The bottom support 65 can turn about a shaft 68 into a position indicated by broken lines in Fig. 2.

As shown in Fig. 4 the screen wagon 3 adjoins the collecting cloth 9 by its screen for discharge and by the action of gas springs 69 the screen 20 is urged into a tilted position, which tilted position can be fixed with the aid of a chain 71 fastened on the one hand to the screen 20 and on the other hand to a frame 70 of the screen wagon 3. For ensuring maximum manoeuverability the screen wagon 3 is provided with caster wheels 72.

The steering unit of the harvesting machine 2 is shown in Further detail in Fig. 5. The harvesting machine 2 is provided with a steering device 73 comprising a steering unit 74 and an engine 75 for driving the wagon 6, the engine 74 being disposed on a wagon frame 77 fastened to a side 76 of the conveyor unit 8. The wagon frame 77 constitutes partly a fuel tank 78 and a hydraulic fluid tank 79 for the driving means 14. The steering unit 74 is connected with the front wheels 44 and the rear wheels 46 in a manner such that they are simultaneously rotatable in opposite senses as is indicated by the arrows 80 and 81. The steering unit 74 comprises furthermore two steering rods 82 and 83, which are connected on the one hand with the steering device 73 and on the other hand with the front wheels 44 and the rear wheels 46 respectively and the steering unit 74 furthermore comprises two hydraulic systems 84, 85, which are arranged between the front wheels 44 and the rear wheels 46 on the one hand and the chassis 41 formed by the conveyor unit 8. With the aid of the steering device 53 the front wheels 44 and the rear wheels 46 can be turned, to which turn contribute the hydraulic systems 84 and 85 being operative under the influence of the slide 86. By the combination of the steering rods 82 and 83 with the hydraulic systems 84 and 85 respectively a steering unit 74 is relatively cheap, since any deficient or excessive energization by the hydraulic systems 84 and 85 is absorbed by the rigid coupling rods 82 and 83. For driving the front wheels 44 and the rear wheels 46 said rods are connected with the engine 75 through an axially displaceable driving shaft 87 and a rigid driving shaft 88 respectively.

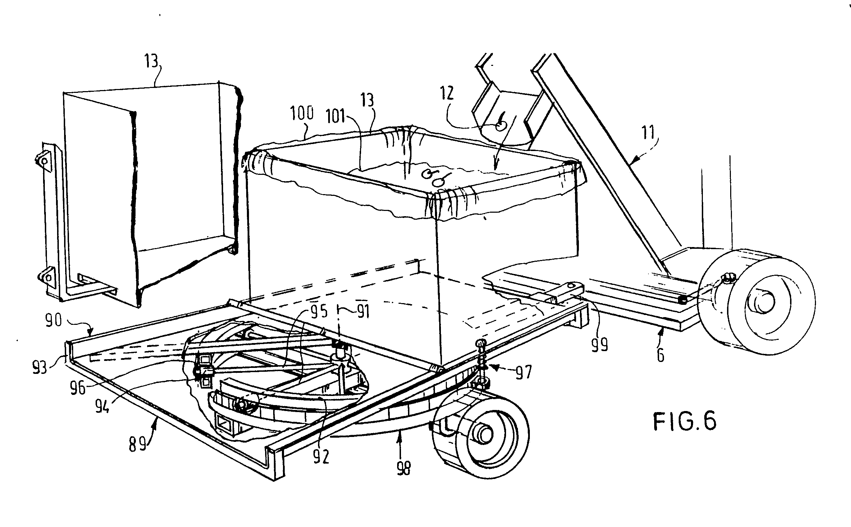

Fig. 6 shows an exchanger 89 for the harvesting machine 2. This exchanger 89 is in line with the conveyor belt 6 and the elevator 11. The exchanger 89 is designed so that a loading and unloading position 90 for an empty container 13 or a filled container 13 is accessible from behind the harvesting machine 2. The exchanger 89 comprises an annular disc 92 rotatable about a vertical axis 91, on which a pallet 93 is deposited. The disc 92 is rotatable on spokes 95 provided with rollers 94, the rollers 94 being held in place by a guard member 96. The exchanger 89 is provided with a guard ring 97, which prevents a rotation about the axis 91 when a container 13 is being filled with the fruit 12. The exchanger 89 is arranged on a separate trailer 98, which is coupled through a drawbar 99 with the wagon 6. The container 13 is provided with a plastic bag 100 containing cold water 101. The cold water 101 serves to receive the harvested fruit 12, which remains floating on the water 101 so that when the container 13 is being filled, the upper fruit 12 will not crush the lower fruit. The cold water furthermore serves to cool the harvested fruit 12.

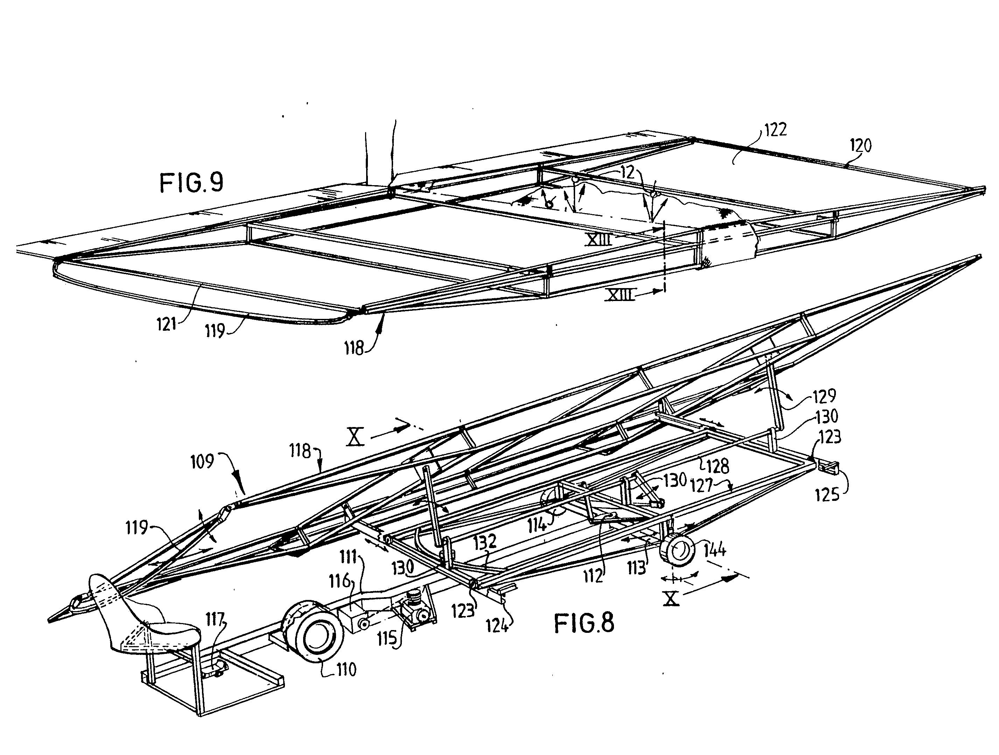

Fig. 8 shows a further embodiment of a screen wagon 109. The screen wagon 109 is provided with a longitudinal chassis beam 111 provided with one wheel 110 and connected through a hinge 112 with a chassis beam 113 having a pair of wheels 114. The wheel 110 is driven by an engine 115 and a change-speed gear 116. The change-speed gear 116 is actuated by means of a pedal 117 so that the wheel 110 can be driven in two opposite directions.

A screen frame 118 is connected with the chassis beam 113 so that with the aid of the pivotable bracket 119 the screen wagon 109 can be steered. The screen frame 118 is rigid and provided with a screen 122 stretched thereon and inclined towards the short sides 120 and 121. The fruit 12 rolls towards these sides 120 and 121 so that it is discharged, dispersed throughout the length of the conveyor belt 6, which thus receives the fruit 12 in a more uniform manner.

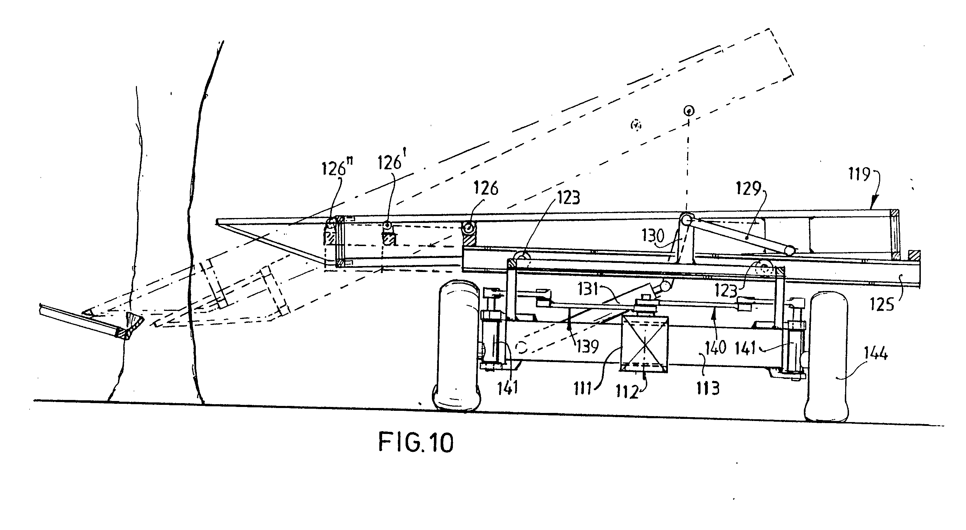

The screen frame 118 is slidable in the longitudinal direction of the screen wagon 109 with the aid of profiles 124 and 125 slidably arranged around rollers 123. By means of the hinges 126 the screen frame 118 is tiltable on the frame 127 rigidly secured to the chassis beam 113. The tilting movement is carried out by the arms 129 rigidly secured to the shaft 128. This shaft is journalled in the trestles 130 and is rotatable with the aid of the hydraulic ram 131. When the hydraulic ram 131 is energized the rigid screen frame 118 performs a tilting, sliding movement indicated by the solid and dot-and-dash lines respectively (see Fig. 10).

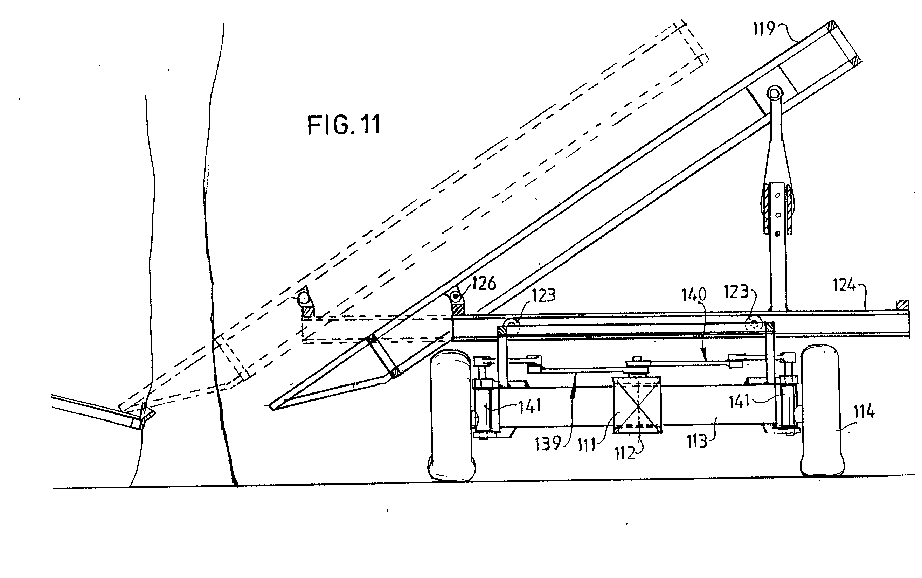

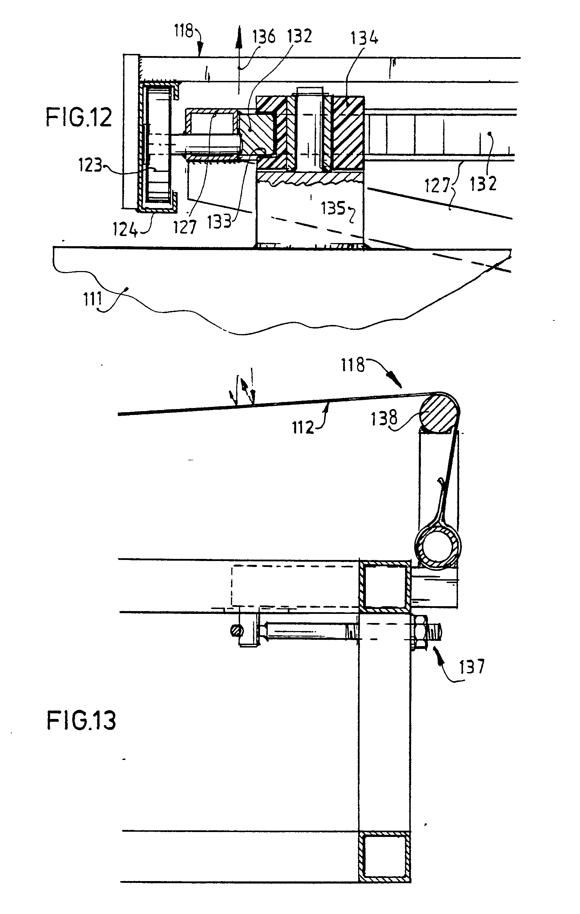

In the variant shown in Fig. 11 the rigid frame 118 is again slidable in the profiles 124 and 125, whilst the tilting movement in the hinges 126 is obtained by the same means as shown in Fig. 4 for the screen wagon 20. Fig. 12 shows in further detail how the rigid frame 118 is slidable and rotatably arranged on the frame 127, which is rigidly secured to the chassis beam 113. The rigid frame 118 can run with the aid of the profiles 124 and 125 on the rollers 123, whilst the frame 127 is enclosed with a beam 132 in a cylinder piece 134 having a recess 133 and fastened to a stand piece 135 rigidly secured to the chassis beam 111. The curved beam 132 can move through the recess 133, whilst a movement in the direction of the arrow 136 is blocked.

Fig. 13 shows more in detail the manner in which the screen 122 is stretched on the screen frame 118. With the aid of the set means 137 the screen 122 can be tightened around the bar 138. By the actuated steering rod pairs 139, 140, connected on the one hand with the swivel 141 and on the other hand with the chassis beam 111 an angular turn of the rigid frame 118 is enlarged and passed to the wheels 114 so that a small angular turn of the screen will result in a large change of the direction of movement of the screen wagon.

According to the invention it is possible to harvest fruit 5 hanging on trees 4 with the aid of two harvesting machines 2 by arranging a harvesting machine 2 on each side of the tree 4. In this case the screen wagon 3 can be dispensed with.

It is furthermore possible to use only one harvesting machine 2. In this case the collecting cloth 9 is divided and two frames 57 each carrying one collecting cloth are used, by which the two collecting cloths 9 are spread beyond the tree 4 to an extent such that the ground 21 below the tree 4 is screened.

## Claims

1. A harvesting machine (2) for harvesting fruit (5) hanging on trees (4), for example cherries (5), comprising a conveyor unit (8) arranged on a wagon (6) and comprising a conveyor belt (7), at least one single collecting cloth (9) which is arranged along the conveyor belt (7) and on the one hand is wound up on a drum (23) extending along the conveyor belt (7), such that on winding up the collecting cloth (9) fruit (5) harvested thereon is discharged on the conveyor belt (7), and on the other hand is connected with a frame (57) for spreading the collecting cloth (9) which frame (57) is connected with the wagon (6), and driving means (14) for driving the conveyor unit (8), characterized by stretching means (63; 101) which automatically stretch the collecting cloth (9) which when spread remains taut, the cloth being supported by the spreading frame (57), such that it is located over and free from the ground (21) under the tree (4).

2. A harvesting machine (2) as claimed in claim 1, characterized in that the stretching means comprise springs (63) which urge the frame (57) in the direction of a spread position of the collecting cloth (9).

3. A harvesting machine (2) as claimed in claim 1 or 2, characterized in that the stretching means (101) comprise a braking device (101) for decelerating the rotation of the drum (23) for spreading the collecting cloth (9) wound up around the drum (23).

4. A harvesting machine (2) as claimed in Claim 1 or 3, characterized in that the frame (57) is provided with at least one supporting wheel (64), which runs on a path (66) formed by a bottom support (65) when the collecting cloth (9) is spread during the link motion of the spreading frame (57) and bears on the ground (21) through the supporting wheel (64) and the bottom support (65).

5. A harvesting machine (2) as claimed in Claims 1 to 4, characterized in that a beam (28) of the spreading frame (57) connected with the collecting cloth (9) is provided with an upright rim (27).

6. A harvesting machine (2) as claimed in Claims 1 to 5, charcterized in that the spreading frame comprises a slidable corner piece (58) connected through a universal joint with a chassis (41) of the wagon (6).

7. A harvesting machine (2) as claimed in Claims 1 to 6, charcterized in that the conveyor unit (8) has mainly the form of a sheath (49) formed by a shoot (50) and a covering plate (51) closing the shoot (50), around which the conveyor belt (7) is passed.

8. A harvesting machine (2) as claimed in Claim 7, characterized in that the covering plate (51) is provided with at least one stiffening rib (53) extending substantially in the transport direction (33) of the conveyor belt (7) and being in linear contact with the conveyor belt (7).

9. A harvesting machine (2) as claimed in Claims 7 or 8, characterized in that the shoot (50) is provided with stiffening pieces (54) arranged between reversing rollers (52) of the conveyor belt and extending transversely of the transport direction (33) of the conveyor belt for supporting a lower run (55) of the conveyor belt (7) and the covering plate (51) respectively.

10. A harvesting machine (2) as claimed in Claims 1 to 9, characterized by a steering unit (74) comprising a steering device (71) and with an engine (75) for driving the wagon (6).

11. A harvesting machine as claimed in Claim 10, characterized in that the wagon frame (77) constitutes at least partly a fuel tank (78) for the engine (75) and/or hydraulic fluid tank (79) for the driving means (14).

12. A harvesting machine (2) as claimed in Claim 10 or 11, characterized in that by means of the steering unit (74) the front and rear wheels (44 and 46) of the wagon (6) are simultaneously rotatable in opposite senses.

13. A harvesting machine (2) as claimed in Claims 10 to 12, characterized in that the steering unit (74) comprises at least one steering rod (82, 83) connected on the one hand with the steering device (73) and on the other hand with the front and rear wheels (44, 46), respectively and furthermore two hydraulic systems (84 and 85) connecting the front and rear wheels (44, 46) respectively with the chassis (41).

14. A harvesting machine (2) as claimed in Claims 1 to 13, characterized by a cleaning unit (35) for separating waste (36) from the fruit (12) which is arranged at the delivery end (10) of the transport unit (8).

15. A harvesting machine (2) as claimed in Claims 1 to 14, in which the conveyor unit (8) is capable of conveying the harvested fruit (12) into a container (13), characterized in that the harvesting machine (2) is provided with an exchanger (89) for the container (13), the loading and unloading position (90) being located in line with the wagon (6).

16. A harvesting machine (2) as claimed in Claim 15, characterized in that the exchanger (89) comprises a pallet (93) arranged on a disc (92) rotatable about a vertical axis (91).

17. A harvesting machine (2) as claimed in Claim 15 or 16, characterized in that the exchanger (89) is arranged on a separate trailer (89) to be coupled with the wagon (6).

18. A harvesting machine (2) as claimed in any of the preceding claims, characterized by two spreading frames (57) each carrying a collecting cloth (9).

19. A harvester (1) comprising a harvesting machine (2) as claimed in any one of Claims 1 to 18 and a screen wagon (109) provided with steering means and having a screen (122) carried by a screen frame (119) and adjoining the collecting cloth (9) for discharge in the working position of the harvester (1), the collecting cloth (9) and the screen (122) substantially screening the ground (21) below a tree (4), characterized in that the screen frame (119) forms part of the steering means of the screen wagon (109).

20. A harvester (1) as claimed in Claim 19, characterized in that the screen frame (119) is rigid.

21. A harvester (1) as claimed in Claim 19 or 20, characterized in that the screen frame (119) is tiltable with the aid of tilting means (126) about a longitudinal axis of the screen wagon (109) and, as the case may be, may be slidable transversely of said longitudinal axis with the aid of displacing means (123; 124; 125).

22. A harvester (1) as claimed in Claims 19 to 21, characterized in that the screen wagon (109) is provided with a longitudinal chassis beam (111) provided with at least one wheel (110), which is rotatably connected with a chassis beam (113) provided with a pair of wheels (124), and with which the screen frame (119) is connected.

**Patentansprüche**

1. Erntemaschine (2) zum Ernten von an Bäumen (4) hängenden Früchten (5), z.B. von Kirschen (5), mit
—einer auf einem Wagen (6) angeordneten Fördervorrichtung (8), die ein Förderband (7) aufweist,
—zumindest einem einzelnen Sammeltuch (9),
—das entlang des Förderbandes (7) angeordnet ist,
—das einerseits auf einer Walze (23) aufgewickelt ist, die sich entlang des Förderbandes erstreckt, so daß beim Aufwickeln des Sammeltuches (9) die darauf gesammelten Früchte (5) auf dem Förderband (7) abgeladen werden und
—das andererseits mit einem Rahmen (57) zum Aufspannen des Sammeltuches (9) verbunden ist, welcher Rahmen (57) mit dem Wagen (6) verbunden its und
—einer Antriebsvorrichtung (14) zum Abtreiben der Fördervorrichtung (8),
gekennzeichnet durch eine Spannvorrichtung (63; 101), die das Sammeltuch (9) derart automatisch spannt, daß es beim Aufspannen straff bleibt, wobei das Tuch von einem Aufspannrahmen (57) derart gehalten ist, daß es oberhalb und frei von dem Boden (21) unter dem Raum (4) angeordnet ist.

2. Erntemaschine (2) nach Anspruch 1, dadurch gekennzeichnet, daß die Spannvorrichtung Federn (63) enthält, welche den Rahmen (57) in Richtung der Aufspannposition des Sammeltuches (9) beaufschlagen.

3. Erntemaschine (2) nach Anspruch 1 oder 2, dadurch gekennzeichnet, daß die Spannvorrichtung (101) eine Bremsvorrichtung (101) zum Verlangsamen der Rotation der Walze (23) aufweist, um das auf die Walze (23) aufgewickelte Sammeltuch (9) zu spannen.

4. Erntemaschine (2) nach Anspruch 1 oder 3, dadurch gekennzeichnet, daß der rahmen (57)
—mit zumindest einem Stützrad (64) versehen ist, welches auf einer durch ein Bodengestell (65) gebildeten Laufbahn (66) läuft, wenn das Sammeltuch (9) während der Gelenkbewegung des Aufspannrahmens (57) aufgespannt wird und
—sich über das Stützrad (64) und Bodengestell (65) auf dem Boden (21) abstützt.

5. Erntemaschine (2) nach den Ansprüchen 1 bis 4, dadurch gekennzeichnet, daß eine mit dem Sammeltuch (9) verbundene Strebe (28) des Aufspannrahmens (57) mit einem aufrechten Rand (27) versehen ist.

6. Erntemaschine (2) nach den Ansprüchen 1 bis 5, dadurch gekennzeichnet, daß der Aufspannrahmen ein verschiebbares Winkelstück (58) enthält, das über eine Kardangelenk mit einem Chassis (41) des Wagens (6) verbunden ist.

7. Erntemaschine (2) nach den Ansprüchen 1 bis 6, dadurch gekennzeichnet, daß die Fördervorrichtung (8) im wesentlichen die form eines Hüllkörpers (49) aufweist, der durch eine Gleitbahn (50) und eine diese Gleitbahn (50) abschließende Deckplatte (51) gebildet ist, um die das Förderband (7) herumgeführt ist.

8. Erntemaschine (2) nach Anspruch 7, dadurch gekennzeichnet, daß die Deckplatte (51) mit zumindest einer Versteifungsrippe (53) versehen ist, die sich im wesentlichen in der Transportrichtung (33) des Förderbandes (7) erstreckt und in linearem Kontakt mit dem Förderband (7) steht.

9. Erntemaschine (2) nach Anspruch 7 oder 8, dadurch gekennzeichnet, daß die Gleitbahn (50) mit Versteifungsstücken (54) versehen ist, die zwischen den Umlenkrollen (52) des Förderbandes angeordnet sind und sich rechtwinklig zur Transportrichtung (33) des Förderbandes erstrecken, um die untere Bahn (55) des Förderbandes (7) bzw. die Deckplatte (51) zu stützen.

10. Erntemaschine (2) nach den Ansprüchen 1 bis 9, gekennzeichnet durch eine Steuereineit (74), die eine Steuervorrichtung (71) enthält und mit einer Maschine (75) zum Antreiben des Wagens (6) versehen ist.

11. Erntemaschine nach Anspruch 10, dadurch gekennzeichnet, daß der Wagenrahmen (77) zumindest teilweise einen Kraftstofftank (78) für die Maschine (75) und/oder einen tank (79) für eine Hydraulikflüssigkeit für die Antriebsvorrichtung (14) bildet.

12. Erntemaschine nach Anspruch 10 oder 11, dadurch gekennzeichnet, daß mittels der Steuereinheit (74) die Vorder- und Hinterräder (44 und 46) des Wagens (6) gleichzeitig in entgegengesetzte Richtungen drehbar sind.

13. Erntemaschine (2) nach den Ansprüchen 10 bis 12, dadurch gekennzeichnet, daß die Steuereinheit (74)
—zumindest eine Steuerstange (82, 83), welche einerseits mit der Steuervorrichtung (73) und andererseits mit den Vorder- und Hinterrädern (44, 46) verbunden ist und

—weiterhin zwei hydraulische Systeme (84 und 85) enthält, die die Vorder- und Hinterräder (44, 46) jeweils mit dem Chassis (41) verbinden.

14. Erntemaschine (2) nach den Ansprüchen 1 bis 13, gekennzeichnet durch eine Reinigungseinheit (35) zur Abtrennung des Abfalls (36) von den Früchten (12), die am Auswurfende (10) der Transporteinheit (8) angeordnet ist.

15. Erntemaschine (2) nach den Ansprüche 1 bis 14, bei der die Fördereinheit (8) in der Lage ist, die geernteten Früche (12) in einen Behälter (13) zu befördern, dadurch gekennzeichnet, daß die Erntemaschine (2) mit einem Wechsler (89) für den Behälter (13) versehen ist, wobei die Be- und Entladeposition (90) in einer Linie mit dem Wagen (6) angeordnet ist.

16. Erntemaschine (2) nach Anspruch 15, dadurch gekennzeichnet, daß der Wechsler (89) eine Palette (93) enthält, die auf einer um eine vertikale Achse (91) drehbaren Scheibe (92) angeordnet ist.

17. Erntemaschine (2) nach Anspruch 15 oder 16 dadurch gekennzeichnet, daß der Wechsler (89) auf einem getrennten Anhänger (89) angeordnet ist, welcher mit dem Wagen (6) koppelbar ist.

18. Erntemaschine (2) nach einem der vorgenannten Ansprüche, gekennzeichnet durch zwei Aufspannrahmen (57), von denen jeder ein Sammeltuch (9) trägt.

19. Erntevorrichtung (1) mit einer Erntemaschine (2) nach einem der Ansprüche 1 bis 18, und mit einem Schirmwagen (109), der mit Steuermitteln versehen ist und einen Schirm (122) aufweist, der von einem Schirmrahmen (19) gehalten ist und in der Arbeitsposition der Erntevorrichtung (1) zum Entladen an das Sammeltuch angrenzt, wobei das Sammeltuch (9) und der Schirm (122) im wesentlichen den Boden (21) unter einem Baum (4) abdecken, dadurch gekennzeichnet, daß der Schirmrahmen (119) einen Teil der Steuermittel des Schirmwagens (109) bildet.

20. Erntevorrichtung (1) nach Anspruch 19, dadurch gekennzeichnet, daß der Schirmrahmen (119) starr ist.

21. Erntevorrichtung (1) nach Anspruch 19 oder 20, dadurch gekennzeichnet, daß der Schirmrahmen (119) mit Hilfe einer Kippvorrichtung (126) um eine Längsachse des Schirmwagens (109) kippbar ist und gegebenenfalls rechtwinklig zu dieser Längsachse mit Hilfe von Verschiebemitteln (123, 124, 125) verschiebbar ist.

25. Erntevorrichtung (1) nach den Ansprüchen 19 bis 21, dadurch gekennzeichnet, daß der Schirmwagen (109) mit einer in Längsrichtung angeordneten Chassis-Strebe (111) versehen ist, welche mindestens ein Rad (110) aufweist und welche drehbar mit einer Chassis-Strebe (113) verbunden ist, die ein Paar von Rädern (124) aufweist und mit der der Schirmrahmen (119) verbunden ist.

## Revendications

1. Machine de récolte (2) pour la récolte de fruits (5) pendus à des arbres (4), par exemple cerises (5), comprenant un groupe transporteur (8) disposé sur un chariot (6) et comprenant un tapis roulant (7), au moins une toile de collecte unique (9) qui est disposée le long du tapis roulant (7) et est d'une part enroulée sur un tambour (23) s'étendant le long du tapis roulant (7), de façon que lors de l'enroulement de la toile de collecte (9) des fruits (5) récoltés sur celle-ci se déchargent sur le tapis roulant, et est d'autre part reliée à un bâti (57) de déploiement de la toile de collecte (9), lequel bâti (57) est relié au chariot (6), et des moyens d'entraînement (14) pour l'entraînement du groupe transporteur (8), caractérisée par des moyens d'étendage (63; 101) qui étendent automatiquement la toile de collecte (9), laquelle une fois déployée demeure tendue, la toile étant supportée par le châssis de déploiement (57) en sorte d'être située au-dessus et écartée du sol (21) situé sous l'arbre (4).

2. Machine de récolte (2) selon la revendication 1, caractérisée en ce que les moyens d'étendage comprennent des ressorts (63) qui sollicitent le bâti (57) dans le sens de déploiement de la toile de collecte (9).

3. Machine de récolte (2) selon la revendication 1 ou 2, caractérisée en ce que les moyens d'étendage (101) comprennent un dispositif de freinage (101) propre à décélérer la rotation décrite par le tambour (23) pour déployer la toile de collecte (9) enroulée autour du tambour (23).

4. Machine de récolte (2) selon la revendication 1 ou 3, caractérisée en ce que le bâti (57) est muni d'au moins une roue porteuse (64), qui roule sur un trajet (66) défini par un support inférieur (65) quand la toile de collecte (9) est déployée au cours du mouvement de tringlage du Bâti de déploiement (57) et porte surle sol (21) par l'intermédiaire de la roue porteuse (64) et du support inférieure (65).

5. Machine de récolte (2) selon l'une des revendications 1 à 4, caractérisée en ce qu'une poutrelle (28) du bâti de déploiement (57) reliée à la toile de collecte (9) est munie d'un rebord dressé vers le haut (27).

6. Machine de récolte (2) selon l'une des revendications 1 à 5, caractérisé en ce que le bâti de déploiement comprend une pièce de coin couilissante (58) reliée par un joint de cardan à un châssis (41) du chariot (6).

7. Machine de récolte (2) selon l'une des revendications 1 à 6, caractérisée en ce que le groupe transporteur (8) principalement la forme d'une gaine (49) formée par un couloir (50) et par une plaque de fermeture (51) fermant le couloir (50), que contourne le tapis roulant (7).

8. Machine de récolte (2) selon la revendication 7, caractérisée en ce que la plaque de couverture (51) présente au moins une nervure raidisseuse (53) s'étendant sensiblement suivant la direction de transport (33) du tapis roulant (7) et en contact linéaire avec le tapis roulant (7).

9. Machine de récolte (2) suivant la revendication 7 ou 8, caractérisée en ce que le couloir (50) est muni de pièces raidisseuses (54) disposées entre des cylindres inverseurs (52) de tapis roulant et s'étendant transversalement à la direction de transport (33) du tapis roulant pour supporter respectivement un brin inférieur (55) du tapis roulant (7) et la plaque de couverture (51).

10. Machine de récolte (2) selon l'une des revendications 1 à 9, caractérisée par un groupe de direction (74) comprenant un dispositif de direction (73) et un moteur (75) d'entraînement du chariot (6).

11. Machine de récolte selon la revendication 10, caractérisée en ce que le bâti de chariot (77) constitue au moins partiellement un réservoir de carburant (78) pour le moteur (75) et/ou un réservoir de fluide hydraulique (79) pour les moyens d'entraînement (14).

12. Machine de récolte (2) selon la revendication 10 ou 11, caractérisée en ce qu'au moyen du groupe de direction (74) on peut braquer simultanément les roues avant et arrière (44 et 46) du chariot (6) en sens opposés.

13. Machine de récolte (2) selon l'une des revendications 10 à 12, caractérisée en ce que le groupe de direction (74) comprend au moins une barre de direction (82, 83) reliée d'une part au dispositif de direction (73) et d'autre part aux roues avant et arrière (44, 46) respectivement et de plus deux systèmes hydrauliques (84 et 85) reliant respectivement les roues avant et arrière (44, 46) au châssis (41).

14. Machine de récolte (2) selon l'une des revendications 1 à 13, caractérisée par un groupe d'épuration (35) pour la séparation des déchets (36) d'avec les fruits (12) qui est disposé à l'extrémité de sortie (10) du groupe transporteur (8).

15. Machine de récolte (2) selon l'une des revendications 1 à 14, dans laquelle le groupe transporteur (8) est capable de transporter les fruits récoltés (12) jusque dans un récipient (13), caractérisée en ce que la machine de récolte (2) est pourvue d'un échangeur (89) de récipients (13), l'emplacement de chargement et de déchargement étant situé en ligne avec le chariot (6).

16. Machine de récolte (2) selon la revendication 15, caractérisée en ce que l'échangeur (89) comprend une palette (93) disposée sur un disque (92) tourillonnant autour d'un axe vertical (91).

17. Machine de récolte (2) selon la revendication 15 ou 16, caractérisée en ce que l'échangeur (89) est disposé sur une remorque indépendante à atteler au chariot (6).

18. Machine de récolte (2) selon l'une quelconque des revendications précédentes, caractérisée par deux bâtis de déploiement (57) portant chacun une toile de collecte (9).

19. Appareil de récolte (1) comprenant une machine de récolte (2) selon l'une quelconque des revendications 1 à 18 et un chariot à écran (109) muni de moyens de direction et comportant un écran (122) porté par un bâti d'écran (119) et contigu à la toile de collecte (9) pour s'y décharger dans la position de travail de l'appareil de récolte (1), la toile de collecte (9) et l'écran (122) faisant sensiblement écran sur le sol (21) situé au-dessous d'un arbre (4), caractérisé en ce que le bâti d'écran (119) fait partie des moyens de direction de chariot à écran (109).

20. Appareil de récolte (1) selon la revendication 19, caractérisé en ce que le bâti d'écran (119) est rigide.

21. Appareil de récolte (1) selon la revendication 19 ou 20, caractérisé en ce que le bâti d'écran (119) peut basculer sous l'effet de moyens de basculement (126) autour de l'axe longitudinal du chariot à écran (109) et, selon le cas, coulisser transversalement audit axe longitudinal sous l'action de moyens de déplacement (123, 124, 125).

22. Appareil de récolte (1) selon l'une des revendications 19 à 21, caractérisé en ce que le chariot à écran (109) présente une poutrelle de châssis longitudinale (111) munie d'au moins une roue (110), qui est articulée sur une poutrelle de châssis (113) munie d'une paire de roues (124), et à laquelle le bâti d'écran (119) est relié.

FIG.1

FIG.7

EP 0 133 334 B1

FIG. 2

FIG. 3

FIG. 4

FIG. 5

EP 0 133 334 B1

FIG.6

FIG.9

FIG.8

FIG.10

FIG. 11

FIG.12

FIG.13